(19) Europäisches Patentamt / European Patent Office / Office européen des brevets

(11) **EP 4 316 646 A1**

(12) **EUROPEAN PATENT APPLICATION**
published in accordance with Art. 153(4) EPC

(43) Date of publication:
**07.02.2024 Bulletin 2024/06**

(21) Application number: **22775391.0**

(22) Date of filing: **17.03.2022**

(51) International Patent Classification (IPC):
***B01J 20/26*** (2006.01)      ***B01J 20/28*** (2006.01)
***G01N 27/62*** (2021.01)

(52) Cooperative Patent Classification (CPC):
**B01J 20/26; B01J 20/28; G01N 27/62**

(86) International application number:
**PCT/JP2022/012248**

(87) International publication number:
**WO 2022/202603 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021 JP 2021052834**

(71) Applicant: **Toray Industries, Inc.**
**Tokyo 103-8666 (JP)**

(72) Inventors:
• **SAKAGUCHI, Yuka**
  **Otsu-shi, Shiga 520-8558 (JP)**
• **HAYASHI, Akihiro**
  **Otsu-shi, Shiga 520-8558 (JP)**
• **HAN, Aishan**
  **Otsu-shi, Shiga 520-8558 (JP)**
• **SAKAGUCHI, Hirokazu**
  **Otsu-shi, Shiga 520-8558 (JP)**

(74) Representative: **Kador & Partner Part mbB**
**Corneliusstraße 15**
**80469 München (DE)**

(54) **POROUS ADSORBENT MATERIAL, SEPARATION COLUMN USING SAME FOR PURIFYING BIOPHARMACEUTICAL, AND METHOD FOR MANUFACTURING BIOPHARMACEUTICAL**

(57) An object of the present invention is to provide a porous adsorption material that is to be used for adsorbing and removing an impurity from a solution containing a raw biopharmaceutical compound while suppressing clogging and is high in separation selectivity, and the present invention provides a porous adsorption material that is to be used for adsorbing and removing an impurity from a solution containing a raw biopharmaceutical compound and includes a layer containing a nonionic polymer on at least one surface of the porous adsorption material.

EP 4 316 646 A1

**Description**

TECHNICAL FIELD

The present invention relates to a porous adsorption material, a separation column using the porous adsorption material for purification of a biopharmaceutical, and a method for manufacturing a biopharmaceutical.

BACKGROUND ART

Porous materials typified by activated carbon and silica gel are a material having pores of a fine size, and have a property of easily adsorbing various substances. This property is used to apply porous materials to deodorants, desiccants, and industrially, separation of substances, and the like.

Protein separation is performed in various fields such as manufacturing processes of chemicals, foods, pharmaceuticals, and cosmetics, and removal of pathogenic substances and environmental pollutants. Widely known protein separation methods include a mechanical or physical method such as centrifugation or precipitation and a method, such as solvent extraction, adsorption, or chromatography, in which a separation material is used.

In particular, in processes of manufacturing a biopharmaceutical such as an antibody pharmaceutical using biotechnology such as a cell culture technology, many protein separation technologies are used such as affinity chromatography with a protein A column or the like, ion exchange chromatography, and depth filtration.

A protein adsorption material used for protein separation is, for example, to have high adsorption ability, to be less likely to clog and degrade even when the material for separation adsorbs a protein or the like, and to be capable of exhibiting stable performance for a long time.

In some biopharmaceutical manufacturing processes, the antibody concentration is 2 to 3 times higher than blood antibody concentration. Therefore, in the case of using a protein adsorption material in a biopharmaceutical manufacturing process, the protein adsorption material is required not only to have high adsorption ability but also to be less likely to clog and degrade than in a case where the protein adsorption material adsorbs a substance in blood.

Methods of improving the adsorption ability of a protein adsorption material include a method of increasing the adsorption capacity and a method in which the surface of an adsorption material is chemically modified to improve the adsorption selectivity. A technique is disclosed in which porous solid fibers having a modified cross-section is used as a protein adsorption material (Patent Document 1). Patent Document 1 describes a method of providing an adsorption material having high adsorption performance by using fibers having a modified cross-section of a specific shape to increase the surface area per unit volume.

A protein adsorption material has high adsorptive performance such that a protein that is not an adsorption target is easily adsorbed on the surface of the material. In the case of a protein adsorption material having pores, the protein adsorbed on the material surface enters a pore to change the pore size or block access to the pore, and thus adsorption of the target protein is prevented, so that there is a concern that the adsorption performance deteriorates.

As a method of maintaining high protein adsorption performance while suppressing clogging due to protein adsorption on the material surface, there is a method in which a hydrophilic polymer is supported on the material surface. For example, Patent Document 2 describes a method of providing a protein adsorption material having high blood compatibility while deterioration of the protein adsorption ability is suppressed by immobilizing a nitrogen-containing polymer containing a carboxylic acid vinyl ester on the surface.

Patent Document 3 describes a method of providing a porous hollow fiber membrane in which a polymer containing a polysulfone-based polymer as a main component and containing a monocarboxylic acid vinyl ester unit on the surface is supported and thus a protein such as an antibody as well as a virus can be separated at a low pressure in a short time while clogging with the protein is suppressed.

Patent Document 4 describes a method of providing an adsorption bead capable of improving the blood compatibility while the adsorptivity of the porous bead is maintained by supporting a polymer containing a monomer having a charge and a monomer having a specific structure as monomer units on the surface of the porous bead to prevent inhibition of adsorption of a hydrophobic protein caused by bead pores excessively hydrophilized due to the hydrophilicity of the polymer or to prevent deterioration of the adsorptivity caused by pores blocked by the polymer.

Patent Document 5 describes an adsorbent for removal of blood cells that is capable of adsorbing and removing a blood cell component while blood coagulation in a blood cell adsorber is prevented by immobilizing a specific amount of a hydrophilic polymer resin in surface pores of a porous adsorption substrate by an anchor effect to adjust a balance between hydrophilicity and hydrophobicity and reduce a pressure loss in the blood cell adsorber, and a method for manufacturing the adsorbent.

PRIOR ART DOCUMENT

PATENT DOCUMENTS

Patent Document 1: International Publication No. 2016/067967
Patent Document 2: Japanese Patent Laid-open Publication No. 2014-207989
Patent Document 3: International Publication No. 2019/225730
Patent Document 4: Japanese Patent Laid-open Publication No. 2020-6155
Patent Document 5: Japanese Patent No. 5420341

SUMMARY OF THE INVENTION

PROBLEMS TO BE SOLVED BY THE INVENTION

However, in Patent Document 1, the porous fiber surface is not treated with a hydrophilic polymer or the like, and a protein that is not an adsorption target is attached to the fiber surface to prevent the target protein from approaching the pores, so that there is a concern that the amount of the adsorbed target protein is decreased.

In Patent Documents 2 to 5, a hydrophilic polymer is supported on the surface of a protein adsorption material in order to suppress attachment of a protein to the surface of the protein adsorption material. However, for controlling adsorption and non-adsorption of a protein to the surface of the material, only the amount of the hydrophilic polymer on the surface of the material is specified, but the thickness of the hydrophilic polymer in the depth direction of the material is not described.

If the hydrophilic polymer has a large thickness in the depth direction of the material in the protein adsorption material, the hydrophilic polymer may enter the inside of a pore on the surface to change the pore size, or may act to suppress attachment of a protein and thus inhibit adsorption of the adsorption target protein, so that the amount of the protein adsorbed in pores may be decreased. Meanwhile, if the hydrophilic polymer has too small a thickness in the depth direction of the material, a protein that is not an adsorption target may be attached to the surface of the material to prevent the adsorption target protein from approaching the pores, so that the amount of the protein adsorbed in the pores may be decreased.

The inventors have conducted studies and found that a protein adsorption material having high separation selectivity can be obtained by controlling the thickness of a layer containing a nonionic polymer having a hydrophilic unit in the depth direction of the material within a specific range, while suppressing clogging due to adsorption of a protein that is not an adsorption target to the material surface.

An object of the present invention is to provide a porous adsorption material that is capable of adsorbing a target protein while suppressing clogging due to adsorption of a protein that is not an adsorption target, high in separation selectivity, and to be used for adsorbing and removing an impurity from a solution containing a raw biopharmaceutical compound.

SOLUTIONS TO THE PROBLEMS

As a result of intensive studies to solve the above problems, the present invention has found that a porous adsorption material can be obtained that is high in separation selectivity and to be used for adsorbing and removing an impurity from a solution containing a raw biopharmaceutical compound while suppressing clogging due to adsorption of a protein that is not an adsorption target to the material surface, by having a layer containing a nonionic polymer. That is, the present invention is as follows.

A porous adsorption material that is to be used for adsorbing and removing an impurity from a solution containing a raw biopharmaceutical compound and includes a layer containing a nonionic polymer on at least one surface of the porous adsorption material.

EFFECTS OF THE INVENTION

The porous adsorption material of the present invention is capable of adsorbing a target protein while suppressing clogging due to adsorption of a protein that is not an adsorption target, and therefore can be suitably used as a material for adsorption and removal of an impurity from a solution containing a raw biopharmaceutical compound.

EMBODIMENTS OF THE INVENTION

The porous adsorption material of the present invention includes a layer containing a nonionic polymer on at least one surface.

The present invention is preferably a protein adsorption material having pores that includes a layer containing a biological component attachment-inhibiting polymer on at least one surface, and the layer containing the biological component attachment-inhibiting polymer has a thickness of 3 um or less in compositional analysis of a cross-section of the protein adsorption material by time-of-flight secondary ion mass spectrometry (TOF-SIMS).

Here, the term "porous adsorption material" generally refers to a material having fine pores, and the material has a property of easily adsorbing various substances. Examples of the substance adsorbed by the porous adsorption material include substances understood as an impurity in a solution containing a raw biopharmaceutical compound, and specific examples of the substance include the substances described below, other proteins, lipids, and water.

The protein adsorption material refers to a material having protein adsorption performance. The porous adsorption material or the material included in the protein adsorption material is not particularly limited, and examples the material include cellulose-based polymers such as polymethyl methacrylate (hereinafter, referred to as PMMA), polystyrene, polyethylene, polypropylene, cellulose acetate, cellulose diacetate, and cellulose triacetate, fluororesins such as polycarbonate, polyurethane, polyvinyl chloride, and polyvinylidene fluoride, polyesters such as polyacrylonitrile and polyethylene terephthalate, polyamides, silicon dioxide used in quartz, silica gel, and the like, aluminosilicates used in zeolite and the like, and amorphous carbon used in carbon fibers, activated carbon, and the like. Copolymers and composite materials thereof may be included. A protein adsorption material including a substrate containing at least one selected from PMMA, polystyrene, polypropylene, silicon dioxide, aluminosilicates, and amorphous carbon is particularly preferable because such a protein adsorption material exhibits excellent adsorption performance. Among them, a substrate containing at least one selected from PMMA, polystyrene, and polypropylene is more preferable as a substrate included in the protein adsorption material because such a substrate efficiently adsorbs an adsorption target protein. PMMA is particularly preferable because a substrate having a uniform pore size can be obtained by mixing isotactic PMMA and syndiotactic PMMA to form a stereo complex as a three dimensional composite. In particular, polystyrene and polypropylene may be used in a core-sheath composite fiber in which polystyrene serves as a core component and polystyrene and polypropylene serve as a sheath component.

Examples of the shape of the porous adsorption material or the material included in the protein adsorption material include shapes of fibers, nonwoven fabrics, woven fabrics, knitted fabrics, particles, films, and molded articles. Among them, fibers can have a large specific surface area when the fiber diameter is small, and therefore the porous adsorption material or the protein adsorption material of the present invention preferably has a fiber shape. In the present invention, fibers may be either solid fibers having no cavity continuous in the longitudinal direction or hollow fibers having a cavity.

In the hollow fibers, if a solution containing an adsorption target protein and a protein that is not an adsorption target is brought into contact with only the inside of the hollow fibers, the adsorption target protein may be not adsorbed efficiently because the specific surface area is small. Even if the solution containing the adsorption target protein and the protein that is not to an adsorption target is brought into contact with both the inside and the outside of the hollow fibers to increase the specific surface area, the inside of the hollow fibers may be not in contact with the solution containing the adsorption target protein and the protein that is not an adsorption target efficiently and thus the adsorption target protein may be not removed sufficiently because the flow rate of the solution containing the adsorption target protein and the protein that is not to an adsorption target is slower inside than outside of the hollow fibers. Therefore, in order to obtain high protein adsorption performance, solid fibers are preferably used as the material included in the protein adsorption material. The solid fibers may include a single component or two or more components, and may have any form such as an asymmetric structure, a uniform structure, a sea-island structure, or a core sheath structure. Among them, a uniform structure having continuous pores up to the inside of the solid fiber is preferable from the viewpoint of increasing the amount of the adsorbed protein.

In a case where the porous adsorption material or the protein adsorption material has a shape of a fiber such as a solid fiber or a hollow fiber, the shape of the fiber cross-section is not particularly limited, and may be a circular shape or a shape other than a circular shape. The fiber is preferably a fiber having a modified cross-sectional shape having a protrusion called a fin that is a protrusion present on the periphery of the transverse section of a fiber. In a case where the porous adsorption material or the protein adsorption material has a shape of a fiber, the material having a fin is deformed to increase the surface area per volume, and as a result, improvement in the adsorption performance can be expected.

The number of fins is not particularly limited, and the upper limit of the number is preferably 12 or less, more preferably 8 or less, and particularly preferably 6 or less. If the number of fins is excessively increased, the gap between the fins may be narrowed to reduce the amount of the surface area per volume, or the liquid to be treated may be less likely to contact with the material between the fins.

In the case of using a fiber having a modified cross-sectional shape as the porous adsorption material or the protein adsorption material, fins of adjacent fibers may be fitted to each other to inhibit contact between the fiber surface and the solution. Therefore, in the case of using a fiber having a modified cross-sectional shape as the protein adsorption material, the fiber is preferably used in a state of being blended with a fiber having a circular shape or an elliptical shape without a fin.

The porous adsorption material of the present invention can be used for adsorbing and removing an impurity from a solution containing a raw biopharmaceutical compound. The term "biopharmaceutical" refers to a pharmaceutical that is manufactured using biotechnology such as genetic recombination or cell culture and contains a protein such as an antibody, a hormone, or an enzyme as an active ingredient. The active ingredient of a biopharmaceutical is produced by a cell, and a solution containing the active ingredient is separated from the cell. The term "solution containing a raw biopharmaceutical compound" refers to this separated solution. The term "impurity" refers to a substance, other than the active ingredient, contained in the solution containing a raw biopharmaceutical compound. Examples of the impurity include host cell proteins (hereinafter, referred to as "HCPs"), antibody degradation products, components derived from a medium, DNAs, viruses, and free protein A.

The adsorption target protein of the protein adsorption material is not particularly limited, and examples of the protein include albumin, globulin, and fibrinogen. In processes of manufacturing a biopharmaceutical such as an antibody pharmaceutical using biotechnology such as a cell culture technology, many protein separation technologies are used such as affinity chromatography with a protein A column or the like, ion exchange chromatography, and depth filtration. In the case of using the protein adsorption material of the present invention in a manufacturing process of a biopharmaceutical, examples of the adsorption target protein include host cell proteins (HCPs), antibody degradation products, components derived from a medium, DNAs, viral particles, and free protein A.

The porous adsorption material of the present invention includes a layer containing a nonionic polymer on at least one surface of the porous adsorption material. The term "nonionic polymer" refers to a polymer that is neutrally charged as a whole. The phrase "polymer that is neutrally charged" refers to a polymer having a pH within a range of 6.0 to 7.5 in a state of a solution. Within this range, even a polymer containing a zwitterion may be used. As the solvent for preparation of the solution, water or water containing an organic solvent such as ethanol may be used.

Among nonionic polymers, hydrophilic polymers are more preferable. The term "hydrophilic polymer" refers to a polymer having a hydrophilic functional group such as an ether group, an ester group, an amide group, a hydroxy group, or a carboxy group in the polymer structure. These functional groups preferably included at a content of 9 wt% or more based on the total weight of the polymer.

Among such nonionic and hydrophilic polymers, biological component attachment-inhibiting polymers are still more preferable. The term "biological component attachment-inhibiting polymer" refers to a polymer having a property such that when the polymer is formed into a flat membrane and brought into contact with human blood, the number of attached platelets in an area of $4.3 \times 10^3 \ \mu m^2$ is 20 or less. A method of producing a flat membrane of the polymer is not particularly limited, and the flat membrane can be produced, for example, with a method in which a polysulfone substrate is immersed in a solution of the polymer to be checked, and the polymer to be checked is crosslinked to the polysulfone substrate by $\gamma$-irradiation and immobilized.

A specific measurement procedure of the number of attached platelets will be described. For measurement of the number of attached platelets, human venous blood is collected, then immediately heparin is added to a content of 50 U/ml, and the resulting blood is brought into contact with the flat membrane within 10 minutes after the collection of blood, and shaken at 37°C for 4 hours. Then, the flat membrane is washed with physiological saline, blood components are immobilized with physiological saline containing glutaraldehyde, and the flat membrane is washed with distilled water. The flat membrane is dried under a reduced pressure of 0.5 Torr at normal temperature for 10 hours, a Pt-Pd thin film is formed on the flat membrane surface by sputtering, and the resulting product is used as a sample. The flat membrane surface is observed with a scanning electron microscope at a magnification of 1500 times, and the number of attached platelets in an area of $4.3 \times 10^3 \ \mu m^2$ is counted. The average of the numbers of attached platelets in 10 different fields of view is determined as the number of attached platelets (number/$4.3 \times 10^3 \ \mu m^2$). In order to obtain a sufficient biological component attachment-inhibiting effect, the number of attached platelets is $20/4.3 \times 10^3 \ \mu m^2$ or less, and preferably $10/4.3 \times 10^3 \ \mu m^2$ or less.

In particular when the porous adsorption material or the protein adsorption material of the present invention is used for separating a biological component, the layer containing the biological component attachment-inhibiting polymer is preferably on the surface on the side with which the biological component first comes into contact. Here, the biological component refers to a substance included in a living body, and specifically refers to a protein, a lipid, a carbohydrate, or the like.

A method of bringing the porous adsorption material or the protein adsorption material into contact with the biological component is not particularly limited as long as the porous adsorption material or the protein adsorption material can be in contact with the biological component, and examples of the method include a method in which a solution containing the biological component is passed through the porous adsorption material or the protein adsorption material, and a method in which the porous adsorption material or the protein adsorption material is immersed in a solution containing the biological component.

If the layer containing the nonionic polymer or the biological component attachment-inhibiting polymer has a large thickness in the porous adsorption material or the protein adsorption material, the biological component attachment-inhibiting polymer may enter the inside of a pore on the surface to change the pore size, or may act to suppress attachment of the biological component and thus inhibit adsorption, so that the amount of the protein adsorbed in pores may be decreased. Therefore, the layer containing the nonionic polymer or the biological component attachment-inhibiting polymer preferably has a thickness of 5 um or less, and more preferably 3 um or less. Meanwhile, if the layer containing the nonionic polymer or the biological component attachment-inhibiting polymer has too small a thickness, a protein that is not an adsorption target may be attached to the surface of the material to prevent the adsorption target protein from approaching the pores, so that the amount of the protein adsorbed in the pores may be decreased. Therefore, the layer containing the nonionic polymer or the biological component attachment-inhibiting polymer preferably has a thickness of 1.5 um or more, and more preferably 2 um or more. Here, the thickness of the layer containing the nonionic polymer or the biological component attachment-inhibiting polymer means a value determined by compositional analysis of a cross-section of the protein adsorption material by time-of-flight secondary ion mass spectrometry (TOF-SIMS). The measurement lower limit of the thickness determined from a line profile of a cross-section is 0.2 um due to limitation of the spatial resolution of TOF-SIMS, but a thickness reaching 10 nm can be measured with a method of combining sample preparation by a crosswise cutting method using a surface/interface physical property analyzer (SAICAS (trade mark)) and depth profile measurement by TOF-SIMS using an argon gas cluster ion beam (Ar-GCIB), or can be measured using XPS. The thickness of the layer containing the biological component attachment-inhibiting polymer in the protein adsorption material of the present invention is not particularly limited as long as it is 3 um or less.

More specifically, in the method of measuring the thickness of the layer containing the nonionic polymer or the biological component attachment-inhibiting polymer by compositional analysis using time-of-flight secondary ion mass spectrometry (TOF-SIMS), a peak derived from the biological component attachment-inhibiting polymer is detected by compositional analysis with a TOF-SIMS apparatus, and thus knowledge on the abundance of the nonionic polymer or the biological component attachment-inhibiting polymer can be obtained by analyzing the mass (m/z), and the thickness of the layer containing the nonionic polymer or the biological component attachment-inhibiting polymer can be measured. As a method of determining the thickness, the methods described in the section of EXAMPLES (Layer Thickness Measurement 1 and Layer Thickness Measurement 2) can be used.

In compositional analysis by TOF-SIMS, pulsed ions (primary ions) are applied to a sample surface placed in ultrahigh vacuum, and ions (secondary ions) released from the sample surface are given certain kinetic energy, and guided to a time-of-flight mass analyzer. Each of the secondary ions accelerated with the same energy passes through the analyzer at a speed corresponding to the mass, and since the distance to the detector is constant, the time taken to reach the detector (flight time) becomes a function of the mass, and the distribution of the flight time is accurately measured to obtain a secondary ion mass distribution, i.e. a mass spectrum. For example, when a secondary negative ion is detected using $Bi_3^{++}$ as a primary ion, the peak at m/z = 26.01 corresponds to $CN^-$, and the peak at m/z = 42.01 corresponds to $CNO^-$. When sufficient measurement cannot be performed with the above-described ion species, the ion species can be replaced with a species characteristic of the nonionic polymer or the biological component attachment-inhibiting polymer to be used.

The conditions for compositional analysis by TOF-SIMS measurement are as follows. The measurement region has a size of 50 um × 50 um, the primary ion acceleration voltage is 25 kV, and the pulse width is 125.0 ns. The detection depth in this detection method is several nanometers or less. The detection depth in this analysis method is several nanometers or less. More specifically, the measurement is performed in accordance with "(1) TOF-SIMS Measurement" described below.

In a case where the nonionic polymer or the biological component attachment-inhibiting polymer is present on at least one surface of the porous adsorption material or the protein adsorption material, the abundance of the nonionic polymer or the biological component attachment-inhibiting polymer on the surface of the porous adsorption material or the protein adsorption material can be quantified by X-ray electron spectroscopy (XPS). Here, for the abundance of the nonionic polymer or the biological component attachment-inhibiting polymer on the surface of the porous adsorption material or the protein adsorption material, the ratio of nitrogen atoms to 100 (% by number of atoms) of the total atoms detected by XPS can be used as an index in measurement from the side of the layer containing the nonionic polymer or the biological component attachment-inhibiting polymer. In the measurement by XPS from the side of the layer containing the nonionic polymer or the biological component attachment-inhibiting polymer in the porous adsorption material or the protein adsorption material, if the ratio of nitrogen atoms to 100 (% by number of atoms) of the total atoms is too large, the adsorption target protein may be prevented from approaching the pores of the porous adsorption material or the protein adsorption material, so that the amount of the protein adsorbed in the pores may be decreased. Meanwhile, if the ratio of nitrogen atoms to 100 (% by number of atoms) of the total atoms is too small in the measurement by XPS, a protein that is not an adsorption target may be attached to the surface of the material to prevent the adsorption target protein from approaching the pores, so that the amount of the protein adsorbed in the pores may be decreased. Therefore, in the measurement from the side of the layer containing the nonionic polymer or the biological component attachment-inhibiting polymer, the ratio of nitrogen atoms to 100 (% by number of atoms) of the total atoms detected by XPS is preferably 0.5 (% by number of atoms) or more and 8 (% by number of atoms) or less.

In the measurement by XPS from the side of the layer containing the nonionic polymer or the biological component attachment-inhibiting polymer, the ratio of the detected nitrogen atoms is measured at a measurement angle of 45° in XPS. When measurement is performed at a measurement angle of 45°, a region with a depth of about 10 nm from the surface is detected. More specifically, the measurement is performed in accordance with "(2) XPS measurement" described below.

The porous adsorption material or the protein adsorption material has pores for efficient removal of an impurity or a protein as an adsorption target. The shape and the size of the porous adsorption material or the protein adsorption material of the present invention are not particularly limited as long as the porous adsorption material or the protein adsorption material has pores in which the target protein can be adsorbed, but if the porous adsorption material or the protein adsorption material has too small an average pore radius, the adsorption target protein cannot enter the pores and therefore such a porous adsorption material or protein adsorption material is not suitable. Meanwhile, if the average pore radius is too large, the pore surface area per unit volume is so small that the adsorption target protein may be not adsorbed efficiently. Therefore, in measurement of the porous adsorption material or the protein adsorption material of the present invention with a differential scanning calorimeter (DSC), although the value of the average pore radius is not particularly limited, the lower limit of the value is preferably 1 nm or more, more preferably 1.5 nm or more, and particularly preferably 2.0 nm or more. Meanwhile, the upper limit of the average pore radius in measurement of the protein adsorption material with a DSC is preferably 100 nm or less, more preferably 40 nm or less, and particularly preferably 25 nm or less.

The average pore radius of the porous adsorption material or the protein adsorption material can be measured using a differential scanning calorimeter (DSC). The porous adsorption material or the protein adsorption material is rapidly cooled to -55°C and heated to 5°C at 0.3°C/min, the peak top temperature of the obtained curve is taken as the melting point, and the average pore radius is calculated from the following formula.

$$\text{Average pore radius [nm]} = (33.30 - 0.3181 \times (\text{melting point of water} - \text{melting point determined from peak top temperature of curve}) \ [°C]) / (\text{melting point of water} - \text{melting point determined from peak top temperature of curve}) \ [°C]$$

The above-described measurement method refers to the description in the literature (Kazuhiro Ishikiriyama et al.; JOURNAL OF COLLOID AND INTERFACE SCIENCE, 171, 103-111, (1995)).

In order to adsorb and remove the adsorption target protein efficiently using the porous adsorption material or the protein adsorption material of the present invention, many pores are preferably present that have an optimum size for the porous adsorption material or the protein adsorption material. If pores having an excessively large or excessively small size are present, the adsorption target protein may be not adsorbed efficiently. For efficient adsorption of the adsorption target protein, the ratio of the average pore size in the central portion to the average pore size in the vicinity of the surface is preferably 0.5 or more, and more preferably 0.8 or more when the protein adsorption material is observed with a scanning electron microscope (SEM) and measured by image analysis. Meanwhile, the ratio of the average pore size in the central portion to the average pore size in the vicinity of the surface is preferably 1.3 or less, and more preferably 1.1 or less when the protein adsorption material is observed with a SEM and measured by image analysis.

To compare between the average pore size in the vicinity of the surface and the average pore size in the central portion in the porous adsorption material or protein adsorption material having pores, a method obtaining a cross-section of the porous adsorption material or the protein adsorption material and following observation using a scanning electron microscope (SEM) can be used. The obtained cross-section is observed using a SEM at a magnification of 50,000 times, and an image of $640 \times 480$ pixels is binarized with image processing software (ImageJ, developer: National Institutes of Health) to obtain an image in which a hole is shown in black and a structural polymer portion is shown in white.

Here, the cross-section of the porous adsorption material or the protein adsorption material refers to a surface obtained by cutting perpendicularly to a surface, of the porous adsorption material or the protein adsorption material, in contact with a solution containing a raw biopharmaceutical compound or a solution containing the adsorption target protein and a protein that is not an adsorption target. For example, in the case of a fiber, the cross-section refers to a surface obtained by cutting perpendicularly to the longitudinal direction. In the cross-section of the porous adsorption material or the protein adsorption material, the central portion and the vicinity of the surface are observed, and image analysis is performed. The pore radius in the vicinity of the surface is the pore radius at the surface of the porous adsorption material or the protein adsorption material, that is, it is measured at the periphery of the material from the cross-sectional view. More specifically, in a field of view 1 of 225 × 225 pixels in contact with the surface and a field of view 2 of 225 × 225 pixels adjacent to the field of view 1 in the direction perpendicular to the surface, in a case where the ratio of the pore radius in the field of view 2 to the pore radius in the field of view 1 is less than 2, a field of view of 640 × 480 pixels completely covering the field of view 1 is referred to as the vicinity of the surface. However, in the case of a PMMA fiber or the like, for example, a layer having a very small pore radius, called a dense layer, may be present on the surface. From the viewpoint that the pore radius is to be optimized without variation for adsorption and removal of the adsorption target protein, it is appropriate that a portion of such a layer is not included in the "vicinity of the surface". Therefore, in a case where the ratio of the pore radius in the field of view 2 to the pore radius in the field of view 1 is 2 or more, a field of view of 640 × 480 pixels completely covering the field of view 2 and including none of the field of view 1 is referred to as the vicinity of the surface.

The center of a straight line having the longest length among straight lines obtained by connecting two points on the surface is referred to as the central portion. The average pore size is also determined at the central portion.

In all of the above-described cases, when the shape of a pore is not a perfect circle, the shape is assumed to be a perfect circle, and the pore radius is calculated from the pore area with the following formula.

Pore radius [nm] in central portion or in vicinity of surface = (pore area [$nm^2$] in central portion or in vicinity of surface$/\pi$)$^{1/2}$

The porous adsorption material or the protein adsorption material is cut at arbitrary five sites, the obtained cross-sections are each measured at the central portion and the vicinity of the surface to determine the pore radius, and an average of the determined pore radii is determined as the average pore size in the central portion or the vicinity of the surface.

In the present invention, the specific surface area of the porous adsorption material refers to the area of a surface on which a solution containing a raw biopharmaceutical compound and containing the adsorption target protein and the like can be in contact with the adsorption material, with respect to the weight of the adsorption material. In order to adsorb and remove the adsorption target protein efficiently, the porous adsorption material desirably has a large specific surface area, but if the specific surface area is too large, the strength deteriorates. From the above, the specific surface area is preferably 0.001 $m^2$/g or more, more preferably 0.01 $m^2$/g or more, and still more preferably 0.05 $m^2$/g or more. Meanwhile, the specific surface area is preferably 0.1 $m^2$/g or less, and more preferably 0.5 $m^2$/g or less.

The amount of the protein adsorbed by the porous adsorption material or the protein adsorption material can be measured with a method in which the porous adsorption material or the protein adsorption material is immersed in a solution containing the adsorption target protein and a protein that is not an adsorption target, and after a lapse of a certain time, the amount of the adsorption target protein in the solution is measured and subtracted from the amount of the adsorption target protein in the solution before the immersion to determine the amount of the adsorbed protein. In another method, the porous adsorption material or the protein adsorption material is incorporated into a module or a column, a circuit is connected, a solution containing the adsorption target protein and a protein that is not an adsorption target is circulated, and after a lapse of a certain time, the amount of the adsorption target protein in the solution is measured and subtracted from the amount of the adsorption target protein in the solution before the immersion to determine the amount of the adsorbed protein.

The method of measuring the amount of the protein is not particularly limited, and examples of the method include the Lowry method, a bicinchoninic acid method, an ELISA method, and immunoturbidimetry. Among them, an ELISA method and immunoturbidimetry are preferable because of the high specificity for the adsorption target protein.

As described above, the layer disposed on at least one surface of the protein adsorption material of the present invention contains a biological component attachment-inhibiting polymer. Examples of the biological component attachment-inhibiting polymer include, but are not limited to, polyvinylpyrrolidone, polyethylene glycol, and poly(2-methoxyethyl acrylate).

Among them, a biological component attachment-inhibiting polymer containing a nitrogen atom is preferable. In the case of a biological component attachment-inhibiting polymer containing a nitrogen atom, the existence form of the nitrogen atom is not particularly limited, and for example, the nitrogen atom is preferably contained as a hydrophilic group such as an amide group in the biological component attachment-inhibiting polymer from the viewpoint of the biological component attachment-inhibiting effect.

The nonionic polymer or the biological component attachment-inhibiting polymer used in the present invention is preferably a copolymer including a hydrophilic unit and a hydrophobic unit. In the present description, the term "unit" refers to a repeating unit in a homopolymer or a copolymer obtained by polymerizing monomers. The term "hydrophilic unit" refers to a unit such that a polymer having a mass average molecular weight of 10,000 to 1,000,000 manufactured with monomers each constituting the unit singly is soluble in water. The term "soluble" refers to having a solubility of more than 0.1 g in 100 g of water at 20°C.

In the present description, the hydrophobic unit is preferably a monocarboxylic acid vinyl ester unit.

Here, the monocarboxylic acid means a compound including one carboxy group and a hydrocarbon group bonded to a carbon atom of the carboxy group, that is, a compound represented by "R-COOH" (R represents a hydrocarbon group). The hydrocarbon group R in the monocarboxylic acid may be an aliphatic hydrocarbon group or an aromatic hydrocarbon group. From the viewpoints of ease of synthesis and the like, the hydrocarbon group R is preferably an aliphatic hydrocarbon group, particularly a saturated aliphatic hydrocarbon group. From the viewpoint of manufacturing cost of the carboxylic acid, the saturated aliphatic hydrocarbon group preferably has a linear structure or a branched structure, and more preferably a linear structure. Examples of the monocarboxylic acid in which the hydrocarbon group R is an aromatic hydrocarbon group include benzoic acid and its derivatives. Examples of the monocarboxylic acid in which the hydrocarbon group R is a saturated aliphatic hydrocarbon group include acetic acid, propanoic acid, and butyric acid.

The saturated aliphatic hydrocarbon group may be not only a group having a linear structure such as an ethyl group, an n-propyl group, an n-butyl group, an n-pentyl group, or an n-hexyl group, but also a group having a branched structure such as an isopropyl group or a tertiary butyl group, or a group having a cyclic structure such as a cyclopropyl group or a cyclobutyl group. Furthermore, an ether bond, an ester bond, or the like may be included in the aliphatic chain. In the hydrocarbon group R, a hydrogen atom may be substituted with an arbitrary substituent. However, in a case where a terminal hydrogen atom is substituted with an anionic functional group such as a sulfonic acid group, the structure of a protein that is not an adsorption target may be destabilized and thus attachment to the surface of the protein adsorption material may be induced. Therefore, the terminal hydrogen atom is preferably not substituted with an anionic functional group.

The hydrocarbon group R in the monocarboxylic acid preferably has a small number of carbon atoms from the viewpoint of lowering the hydrophobicity of the monocarboxylic acid to reduce hydrophobic interaction with a protein that is not an adsorption target and thus prevent attachment. Therefore, in a case where R is an aliphatic hydrocarbon group or an aromatic hydrocarbon group, the number of carbon atoms is preferably 1 to 20, more preferably 1 to 9, and still more preferably 2 to 5. In a case where R is a saturated aliphatic hydrocarbon group, the compound having one carbon atom is acetic acid, and the compound having two carbon atoms is propanoic acid.

In the present description, the term "monocarboxylic acid vinyl ester unit" refers to a repeating unit in a homopolymer obtained by polymerizing monocarboxylic acid vinyl ester monomers, and such a monocarboxylic acid vinyl ester unit is preferably a unit (repeating unit) represented by "$-CH(OCO-R)-CH_2-$" (R represents a hydrocarbon group having 1 to 20 carbon atoms). Here, R is the same as described for the monocarboxylic acid above, and preferred examples and the like also follow the above description.

The hydrocarbon group R having 2 to 20 carbon atoms in the monocarboxylic acid vinyl ester unit is preferably a saturated aliphatic hydrocarbon group or an aromatic hydrocarbon group. Among them, an aliphatic hydrocarbon group having 2 to 5 carbon atoms is preferable. Specific examples of the monocarboxylic acid vinyl ester unit in which the hydrocarbon group R having 2 to 20 carbon atoms is a saturated aliphatic hydrocarbon group include a vinyl propanoate unit, a vinyl pivalate unit, a vinyl decanoate unit, and a vinyl methoxyacetate unit. Preferred examples include a vinyl acetate unit, a vinyl propanoate unit, a vinyl butyrate unit, a vinyl pentanoate unit, a vinyl pivalate unit, and a vinyl hexanoate unit because the hydrophobicity is preferably not too strong. Meanwhile, specific examples of the monocarboxylic acid vinyl ester unit in which R is an aromatic group include a vinyl benzoate unit and its substituted products.

The monomer constituting the hydrophobic unit includes at least a monocarboxylic acid vinyl ester, and may further include a unit selected from an acrylic acid ester, a methacrylic acid ester, vinyl-ε-caprolactam, and the like in addition to the monocarboxylic acid vinyl ester.

The monomer constituting the hydrophilic unit is more preferably a monomer having a solubility of more than 10 g in 100 g of water at 20°C. Examples of such a monomer include a vinyl alcohol monomer, an acryloylmorpholine monomer, a vinylpyridine monomer, a vinylimidazole monomer, and a vinylpyrrolidone monomer. Among them, monomers having an amide bond, an ether bond, or an ester bond are preferable because they are not excessively high in hydrophilicity and are thus easily balanced with a hydrophobic monomer compared with monomers having a carboxy group or a sulfonic acid group. In particular, a vinylacetamide monomer, a vinylpyrrolidone monomer, and a vinylcaprolactam monomer, which have an amide bond, are more preferable, and among them, a vinylpyrrolidone monomer is still more preferable because the polymer has low toxicity. Therefore, according to a preferred aspect of the present invention, the biological component attachment-inhibiting polymer contains a vinylpyrrolidone unit as the hydrophilic unit.

The monomer constituting the hydrophobic unit includes at least a monocarboxylic acid vinyl ester, and may further include a unit selected from an acrylic acid ester, a methacrylic acid ester, vinyl-ε-caprolactam, and the like in addition to the monocarboxylic acid vinyl ester.

The nonionic polymer or the biological component attachment-inhibiting polymer preferably has a number average molecular weight of 1,000 or more, and more preferably 5,000 or more from the viewpoint of sufficiently inhibiting attachment of a protein that is not an adsorption target. Meanwhile, the upper limit of the number average molecular weight of the biological component attachment-inhibiting polymer is not particularly limited, and is preferably 1,000,000 or less, more preferably 500,000 or less, and still more preferably 100,000 or less from the viewpoint of avoiding deterioration of efficiency of introduction into the protein adsorption material. The number average molecular weight of the homopolymer or the copolymer can be measured by gel permeation chromatography (GPC).

The copolymer including the hydrophilic unit and the hydrophobic unit preferably has a mole fraction of the hydrophobic unit of 10% or more and 90% or less, more preferably 20% or more and 80% or less, and still more preferably 30% or more and 70% or less from the viewpoint of efficiently inhibiting attachment of a protein that is not an adsorption target. At this time, the hydrophobic unit may include only a monocarboxylic acid vinyl ester unit or may further include another hydrophobic unit. The mole fraction of the hydrophobic unit is preferably set to the above-described upper limit or less in order to suppress an increase in hydrophobicity of the entire copolymer, avoid structural destabilization and denaturation of a protein that is not an adsorption target, and thus prevent attachment of a protein that is not to an adsorption target. The mole fraction is calculated, for example, with a method in which nuclear magnetic resonance (NMR) measurement is performed and the mole fraction is calculated from the peak area ratio of a peak corresponding to each component. If the mole fraction cannot be calculated by the NMR measurement for the reasons such as overlap of the peaks, the mole fraction may be calculated by elemental analysis.

As described above, a copolymer including a monocarboxylic acid vinyl ester unit and a vinylpyrrolidone unit is particularly preferable as the biological component attachment-inhibiting polymer. In this case, the molar ratio of the vinylpyrrolidone unit to the monocarboxylic acid vinyl ester unit is preferably 30 : 70 to 90 : 10, more preferably 40 : 60 to 80 : 20, and still more preferably 50 : 50 to 70 : 30.

Examples of the sequence of units in the above copolymer include a block copolymer, an alternating copolymer, and a random copolymer. Among them, an alternating copolymer or a random copolymer is preferable from the viewpoint of small distribution unevenness of hydrophilic units and hydrophobic units in the entire copolymer. Among them, a random copolymer is more preferable from the viewpoint of ease of synthesis.

Examples of the method of forming a layer containing the biological component attachment-inhibiting polymer on at least one surface of the protein adsorption material include a method of adding the biological component attachment-inhibiting polymer at the time of manufacturing the protein adsorption material and a method of bringing the biological component attachment-inhibiting polymer into contact after manufacturing the protein adsorption material. Among them, a method of bringing the biological component attachment-inhibiting polymer into contact with the protein adsorption material is preferable from the viewpoint that the layer containing the biological component attachment-inhibiting polymer has a thickness that is not too thick and appropriate and that the layer is present on at least one surface. Examples of the method of bringing the biological component attachment-inhibiting polymer into contact with the protein adsorption material include a method of immersing the protein adsorption material in the biological component attachment-inhibiting polymer solution, a method of passing the biological component attachment-inhibiting polymer solution through the protein adsorption material, and a method of spraying the biological component attachment-inhibiting polymer solution onto the protein adsorption material with a spray or the like. Among them, a method of immersing the protein adsorption material in the biological component attachment-inhibiting polymer solution and a method of passing the biological component attachment-inhibiting polymer solution through the protein adsorption material are preferable because the biological component attachment-inhibiting polymer can be applied without unevenness to the surface of the protein adsorption material.

In the case of immersing the protein adsorption material in the biological component attachment-inhibiting polymer solution or in the case of passing the biological component attachment-inhibiting polymer solution through the protein adsorption material, if the concentration of the biological component attachment-inhibiting polymer in the solution is too low, a sufficient amount of the biological component attachment-inhibiting polymer is not introduced onto the surface. Therefore, the concentration of the biological component attachment-inhibiting polymer in the biological component attachment-inhibiting polymer solution is preferably 10 ppm or more, and more preferably 100 ppm or more. However, if the concentration is too high, there is a concern that the amount of a substance eluted from the protein adsorption material increases, the polymer enters the inside of pores, the thickness of the layer containing the biological component attachment-inhibiting polymer increases, and thus the adsorption performance deteriorates. Therefore, the concentration of the biological component attachment-inhibiting polymer in the solution is preferably 100,000 ppm or less, more preferably 10,000 ppm or less, and still more preferably 1,000 ppm or less.

The solvent used for preparing the biological component attachment-inhibiting polymer solution is preferably water. However, in a case where the biological component attachment-inhibiting polymer to be used has low solubility in water, the biological component attachment-inhibiting polymer may be dissolved in an organic solvent that does not dissolve the protein adsorption material or a mixed solvent of water and an organic solvent that is compatible with water and does not dissolve the protein adsorption material. Examples of the organic solvent that can be used in the organic solvent or the mixed solvent include, but are not limited to, alcohol-based solvents such as methanol, ethanol, and propanol.

As the method of forming a layer containing the biological component attachment-inhibiting polymer on the protein adsorption material, a chemical method of immobilizing the biological component attachment-inhibiting polymer on the surface of the protein adsorption material is desirable. The chemical method of immobilizing the biological component attachment-inhibiting polymer on the surface of the protein adsorption material is not particularly limited, and examples of the method include a method of bringing the biological component attachment-inhibiting polymer into contact with the protein adsorption material and then irradiating the resulting product with a radiation, and a method of introducing a reactive group such as an amino group or a carboxy group into both the protein adsorption material and the biological component attachment-inhibiting polymer and reacting both of them. Examples of the method of introducing a reactive group onto the surface of the protein adsorption material include a method of polymerizing monomers having a reactive group to obtain a material having the reactive group on the surface, and a method of introducing a reactive group by ozone treatment or plasma treatment after polymerization.

In the case of using a method of irradiation with a radiation, a radiation can be used such as an α ray, a β ray, a γ ray, an X-ray, an ultraviolet ray, or an electron beam. Irradiation with a radiation is performed in a state where a solution in which the biological component attachment-inhibiting polymer is dissolved is brought into contact with the protein adsorption material, in a state where the biological component attachment-inhibiting polymer is introduced onto the surface of the protein adsorption material and then replaced with a solution not containing the biological component attachment-inhibiting polymer, or in a state where the protein adsorption material is dried. Use of this method is preferable because sterilization of the protein adsorption material can be achieved simultaneously with immobilization of the biological component attachment-inhibiting polymer. In this case, the irradiation dose of the radiation is preferably 15 kGy or more, and more preferably 25 kGy or more. Meanwhile, if the irradiation dose is too high, degradation and decomposition of the polymer are promoted, and therefore the irradiation dose is preferably 100 kGy or less.

An antioxidant may be used for suppressing crosslinking reaction in radiation exposure. The antioxidant means a substance having a property of easily giving electrons to other molecules, and examples of the antioxidant include, but are not limited to, water-soluble vitamins such as vitamin C, polyphenols, and alcohol-based solvents such as methanol, ethanol, and propanol. These antioxidants may be used singly, or in combination of two or more kinds thereof. In the case of using an antioxidant in the protein adsorption material, safety needs to be considered, and therefore an antioxidant having low toxicity such as ethanol or propanol is suitably used.

The nonionic polymer can be also provided on the surface of a porous material with a method similar to the above-described method.

The porous adsorption material or the protein adsorption material of the present invention exhibits excellent protein adsorption performance, and therefore can be applied to a step of recovering an antibody or a pretreatment step of a step of recovering an antibody using a protein A column. The size of an antibody is generally 10 to 15 nm. If the protein adsorption material of the present invention has a pore size of less than the antibody size, the antibody is not adsorbed, and an HCP, an antibody degradation product, a component derived from a medium, a DNA, a virus, free protein A, or the like having a smaller size than an antibody can be adsorbed and removed due to a difference in size.

The porous adsorption material of the present invention has high separation performance. Therefore, in a process of purifying a biopharmaceutical from a solution containing a raw biopharmaceutical compound, the porous adsorption material can be used in a step of recovering an active ingredient of the biopharmaceutical from the solution containing a raw biopharmaceutical compound. In a case where the biopharmaceutical is an antibody pharmaceutical, the antibody is also lost in the subsequent steps, and therefore the recovery rate of the antibody after treating the solution containing a raw biopharmaceutical compound using the porous adsorption material is preferably as high as possible. Specifically, the recovery rate of the antibody is preferably 85% or more, and more preferably 90% or more.

Meanwhile, an as large as possible amount of impurities typified by an HCP are required to be removed, and therefore the residual rate of the HCP after treating the solution containing a raw biopharmaceutical compound using the porous adsorption material is preferably as low as possible. Specifically, the residual rate is preferably 60% or less, more preferably 50% or less, and still more preferably 40% or less. The separation ratio obtained by dividing the recovery rate of the antibody by the residual rate of the HCP is an index of the separation selectivity of the porous adsorption material. The separation ratio is preferably 1.5 or more, more preferably 1.8 or more, and still more preferably 2 or more. As methods of calculating the recovery rate of the antibody, the residual rate of the HCP, and the separation ratio, the methods shown in Examples can be used.

In a manufacturing process of an antibody protein used as an antibody pharmaceutical, which is one of biopharmaceuticals, such as a monoclonal antibody, a polyclonal antibody, a humanized antibody, a human antibody, or an immunoglobulin, in the case of using the protein adsorption material of the present invention in a step of recovering and separating an antibody from a solution containing a raw biopharmaceutical compound or in a pretreatment step of a step of recovering an antibody using a protein A column, the amount of the adsorbed antibody is preferably 100 mg/m$^2$ or less because excessive adsorption of the antibody to the protein adsorption material leads to loss of the antibody. Meanwhile, an as large as possible amount of impurities typified by an HCP are required to be removed, and therefore the amount of the adsorbed HCP is preferably 100 mg/m$^2$ or more. It is required that the amount of the adsorbed antibody as a target is low and the amount of the adsorbed HCP is high, and therefore it can be said that the adsorption ratio of the protein obtained by dividing the amount of the adsorbed HCP by the amount of the adsorbed antibody serves as an index of a protein adsorption material having high purification efficiency. The adsorption ratio of the protein is preferably 2 or more.

In particular, the porous adsorption material or the protein adsorption material of the present invention in which the amount of an antibody to be adsorbed is 100 mg/m$^2$ or less and the separation ratio is 1.5 or more is very useful as a material for adsorption and removal of an HCP as an impurity from a culture supernatant of an antibody-producing cell. The separation ratio is more preferably 1.0 or more, and still more preferably 2.0 or more. When the separation ratio is within the above range, the amount of the HCP per amount of the antibody as an index of the HCP removal efficiency is at a level of several tens of ppm, and at such a level, it is considered that no problem is caused in going to a downstream step such as ion chromatography. When the amount of an antibody to be adsorbed is within the above range, the adsorption material can be prevented from clogging.

For example, PMMA solid fibers having pores with an average pore radius of 5 nm are immersed in an aqueous solution in which a vinylpyrrolidone/vinyl propanoate random copolymer (mole fraction of vinyl propanoate unit: 40%, number average molecular weight: 68,000) is dissolved at a concentration of 100 ppm and an ethanol concentration of 500 ppm, irradiated with a γ ray of 25 kGy, and sampled so that the surface area is 0.03 m$^2$, the sample is put into a tube with a lid, 6.75 mL of a culture supernatant (antibody concentration: 3.63 mg/mL, HCP concentration: 1.46 mg/mL) obtained from a Chinese hamster ovary (CHO) cell and adjusted to pH 7.4 is added, the lid is closed, and the sample and the culture supernatant are brought into contact with each other for 6 hours while shaken at room temperature. The culture supernatant is sampled, and the antibody concentration in the culture supernatant is measured using immunoturbidimetry. The HCP concentration in the culture supernatant is measured with an ELISA method using CHO Host Cell Proteins 3rd Generation (manufactured by Cygnus Technologies). The amount of the adsorbed antibody, the amount of the adsorbed HCP, and the adsorption ratio of the protein are calculated with the following formulas.

$$\text{Amount of adsorbed antibody (mg/m}^2) = ((\text{antibody concentration} \times \text{liquid amount}) \text{ before adsorption} - (\text{antibody concentration} \times \text{liquid amount}) \text{ after adsorption}) \div 0.03$$

$$\text{Amount of adsorbed HCP (mg/m}^2) = ((\text{HCP concentration} \times \text{liquid amount}) \text{ before adsorption} - (\text{HCP concentration} \times \text{liquid amount}) \text{ after adsorption}) \div 0.03$$

$$\text{Adsorption ratio of protein} = \text{amount of adsorbed HCP} \div \text{amount of adsorbed antibody.}$$

In this case, the amount of the adsorbed antibody larger than the pore size is 66 mg/m$^2$, the amount of the adsorbed HCP smaller than the pore size is 148 mg/m$^2$, and the adsorption ratio of the protein is 2.24, and thus the above-described preferred criteria are satisfied. Therefore, in a case where the amount of the adsorbed protein that is larger than the pore size of the protein adsorption material of the present invention and is not an adsorption target is 100 mg/m$^2$ or less, the amount of the adsorbed HCP is 100 mg/m$^2$ or more, and the adsorption ratio of the protein is 2 or more, the protein adsorption material can be particularly applied to a step of recovering an antibody in a manufacturing process of an antibody pharmaceutical, and is preferable.

The recovery rate of the antibody is 92%, the residual rate of the HCP is 55%, and the separation ratio is 1.7, and thus it can be understood that the protein adsorption material is excellent as an adsorption material of a protein that is an impurity, for recovery of an active ingredient of a biopharmaceutical from a solution containing a raw biopharmaceutical compound.

The material has a separation ratio of 1.7, and the amount of the adsorbed antibody is 66 mg/m$^2$. Therefore, it can be said that the material is useful as a material for adsorption and removal of an HCP as an impurity from a culture supernatant of an antibody-producing cell.

A general manufacturing process of an antibody pharmaceutical includes a step of culturing a cell that produces an antibody, a step of separating the antibody from the cell, a step of recovering and purifying the antibody, a step of inactivating a virus, and a step of removing a virus. In the step of separating the antibody from the cell, a centrifugal separation method or a depth filtration method is used. For recovery of the antibody, a protein A column is mainly used on which protein A capable of adsorbing the antibody specifically is immobilized. In the step of purification, an anion exchange column or a cation exchange column is used in order to remove a protein (HCP) derived from an animal cell used for producing the antibody. In the step of inactivating a virus, treatment at a low pH is common in which the pH is set to 4 or less.

In a case where the biopharmaceutical is an antibody pharmaceutical, the solution containing a raw biopharmaceutical compound also contains an aggregate and a degradation product of the antibody as an impurity. The molecular weight of the antibody degradation product depends on the site at which the antibody is decomposed, but is mainly in the range of 10 kDa to 110 kDa. This range is close to the molecular weight distribution of an HCP, and therefore the antibody degradation product can be adsorbed and removed by the porous adsorption material of the present invention. Therefore, the porous adsorption material of the present invention can adsorb an antibody degradation product that is not an antibody as a main component of an antibody pharmaceutical and is difficult to adsorb and remove with a protein A column, and thus an antibody pharmaceutical can be provided that contains few amount of an impurity and is further safe.

In a manufacturing process using a protein A column, if protein A is released from the carrier on which protein A is immobilized, and eluted together with an antibody, the released protein A may affect the living body. The porous adsorption material of the present invention does not use an antibody-binding ligand such as protein A, and therefore a safe antibody pharmaceutical with few side effects can be provided without possibility that protein A is contained in the antibody pharmaceutical as a final product.

The separation column for purification of a biopharmaceutical of the present invention includes the porous adsorption material of the present invention inside.

A casing of the separation column for purification of a biopharmaceutical of the present invention has open ends and examples of the shape of the casing include a rectangular cylinder such as a square cylinder and a hexagonal cylinder and a round cylinder. Among them, a round cylinder, in particular, a cylinder whose cross-section is a perfect circle, is preferable. This is because a casing having no angle can restrain retention of blood in an angle portion. Furthermore, due to both sides being open ends, the flow of treated blood is less likely to form an eddy diffusion, and therefore can minimize the pressure loss. The casing is preferably an instrument formed of a plastic, a metal, or the like. Among them, a plastic is suitably used from the viewpoints of cost, moldability, weight, and the like. In the case of a plastic, for example, a thermoplastic resin that is excellent in mechanical strength and thermal stability is used. Specific examples of such a thermoplastic resin include polycarbonate-based resins, polyvinyl alcohol-based resins, cellulose-based resins, polyester-based resins, polyalylate-based resins, polyimide-based resins, cyclic polyolefin-based resins, polysulfone-based resins, polyether sulfone-based resins, polyolefin-based resins, a polystyrene resin, and mixtures thereof. Among them, polypropylene, polystyrene, polycarbonate, and derivatives thereof are preferable in terms of moldability and radiation resistance required for the casing. This is because a resin having excellent radiation resistance is preferable in the case of radioactive irradiation at the time of sterilization. The resin is produced by injection molding with a mold or cutting of a material.

In a case where the porous adsorption material of the present invention is included inside the separation column for purification of a biopharmaceutical of the present invention, the porous adsorption material is preferably arranged in a straight shape. This is because a liquid to be treated flows along the porous adsorption material and thus is less likely to form an eddy diffusion, and the liquid is evenly distributed in the column easily. Furthermore, the flow path resistance can be suppressed, and particularly in the case of treating a highly viscous solution containing a protein such as an antibody, the protein can be efficiently adsorbed, so that such an arrangement is preferable.

The method for manufacturing a biopharmaceutical of the present invention includes the steps of preparing a solution containing a raw biopharmaceutical compound, and bringing the solution containing a raw biopharmaceutical compound into contact with the porous adsorption material.

The method for manufacturing a biopharmaceutical of the present invention may include a purification method other than the steps of preparing a solution containing a raw biopharmaceutical compound and bringing the solution containing a raw biopharmaceutical compound into contact with the porous adsorption material. The purification method is not particularly limited as long as it is a method suitable for manufacturing a pharmaceutical, and examples of the method include chromatography (such as anion exchange chromatography, cation exchange chromatography, and mixed chromatography), virus inactivation, and virus removal.

In the method for manufacturing a biopharmaceutical of the present invention, a porous adsorption material for adsorption and removal of an impurity from a solution containing a raw biopharmaceutical compound and a porous hollow fiber membrane for separation and removal of an impurity are prepared, and the solution containing a raw biopharmaceutical compound is continuously treated with the porous adsorption material and the porous hollow fiber membrane.

In the method for manufacturing a biopharmaceutical of the present invention, an aspect of housing the porous adsorption material or the porous hollow fiber membrane is not particularly limited, and from the viewpoints of ease of connection and ease of collection of a purified solution, an aspect of a column or a module including the porous adsorption material or the porous hollow fiber membrane inside is preferable.

The term "continuously" means that the outlet through which a purified solution is discharged from the column or module including the porous adsorption material or the porous hollow fiber membrane inside is in communication with the next module or column including the porous hollow fiber membrane or the porous adsorption material inside. An aspect may be used in which between a module or column including the porous hollow fiber membrane inside and a module or column including the porous adsorption material inside, a treatment liquid from a module or column including another porous hollow fiber membrane or porous adsorption material inside is merged, or an aspect may be used in which from between a module or column including the porous hollow fiber membrane inside and a module or column including the porous adsorption material inside, a treatment liquid is branched to a module or column including another porous hollow fiber membrane or porous adsorption material inside. The order of treatment by the porous adsorption material or the porous hollow fiber membrane is not particularly limited, but if adsorption using the porous adsorption material is performed first, the composition of the solution containing a raw biopharmaceutical compound changes, and this change affects the separation performance of the porous hollow fiber membrane. Therefore, separation using the porous hollow fiber membrane is preferably performed first.

The module including the porous hollow fiber membrane inside may have a multistage configuration. That is, a plurality of the modules are arranged, the filtrate outlet of the module in the preceding stage and the module in the subsequent stage are connected, a treatment liquid is sequentially sent to the multistage modules, and separation is repeatedly performed. The multistage arrangement improves the recovery rate of a substance larger than the pore size of the porous hollow fiber membrane.

Examples of the method of making the solution containing a raw biopharmaceutical compound flow into the porous hollow fiber membrane include a total filtration method in which all of the solution containing a raw biopharmaceutical compound is passed through the membrane and the biopharmaceutical remaining in the membrane is recovered by washing, and a cross-flow method in which while filtrated and simultaneously supplied, the solution containing a raw biopharmaceutical compound is circulated a plurality of times to purify the biopharmaceutical, and from the viewpoint of improving the recovery rate with no biopharmaceutical remaining in the membrane, the cross-flow method is preferable.

Hereinafter, a production example of the porous adsorption material according to the present invention will be described with reference to a production example of a protein adsorption material as a representative example.

[Production of Solid Fibers]

A spinning stock liquid in which a polymer is dissolved in a solvent is prepared. At this time, the pore size of the fiber can be increased as the concentration of the stock liquid (concentration of the substance excluding the solvent in the stock liquid) is lower, and therefore the pore size and the pore amount can be controlled by appropriately setting the concentration of the stock liquid. In addition, the pore size and the pore amount can also be controlled by using a polymer having a negatively charged group. From such a viewpoint, in the present invention, the concentration of the stock liquid is preferably 30 mass% or less, more preferably 27 mass% or less, and still more preferably 24 mass% or less. In the case of using, for example, a polymer having methacrylsulfonic acid p-styrenesulfonic acid as the negatively charged group, the proportion of the polymer having methacrylsulfonic acid p-styrenesulfonic acid present in all the polymers is preferably 10 mol% or less.

A spinning stock liquid having too low a viscosity has high fluidity and is difficult to maintain to a target shape. Therefore, the lower limit of the viscosity of the spinning stock liquid is 10 poise or more, more preferably 90 poise or more, still more preferably 400 poise or more, and particularly preferably 800 poise or more. Meanwhile, if the viscosity is too high, the discharge stability deteriorates due to an increase in the pressure loss at the time of discharge of the stock liquid, or the stock liquid is difficult to mix. Therefore, the upper limit of the viscosity of the spinning stock liquid at a temperature in a spinneret is 100,000 poise or less, and more preferably 50,000 poise or less.

The fibers are obtained by discharging the stock liquid from the spinneret, passing the stock liquid through a dry air portion at a certain distance, and then discharging the stock liquid to a coagulating bath including a poor solvent such as water or a non-solvent.

The shape of the fiber cross-section is not particularly limited, and in the case of using a fiber having a modified cross-sectional shape as the protein adsorption material, the fiber is preferably used in a state of being blended with a fiber having a circular shape or an elliptical shape.

As the method of manufacturing the blended fibers, either conventionally known post-spinning fiber blending or spinning-coupled fiber blending can be applied. Examples of the post-spinning fiber blending include, but are not limited to, a method in which fibers are supplied to a step of washing with water or a step of winding in spinning and blended, a method in which fibers are blended by air entanglement, a method in which fibers are blended by twisting, doubling, or alignment, a method in which fibers are blended by intermingling, a method in which fibers are blended by interknitting, and a method in which fibers are dispersed in a liquid and recovered. Examples of the spinning-coupled fiber blending include composite spinning. The composite spinning includes a method in which a plurality of yarns are simultaneously discharged from the same spinneret having a plurality of orifices and the resulting yarns are wound, and a method in which spinnerets having different discharge port shapes are mixed in a spinneret discharge block using mono-hole spinnerets and thus yarns having different cross-sectional shapes are simultaneously discharged and wound. In the post-spinning fiber blending, partial unevenness is likely to occur as compared with the spinning-coupled fiber blending, and in observation of the state of the cross-sections of the fibers, partial unevenness may be seen, and thus there is a problem in quality stability as fibrous materials. In the spinning-coupled fiber blending, unevenness is less likely to occur, and the quality can be stabilized. Therefore, the spinning-coupled fiber blending is preferable. The spinning-coupled fiber blending is also advantageous in that the combination of fiber shapes and the fiber blending ratio can be easily changed by appropriately changing the configuration and the arrangement of the spinneret. An additive and the like may be added as long as an action and an effect in the present invention are not inhibited.

A dry section refers to a portion where the spinning stock liquid discharged from the spinneret runs in an air until the spinning stock liquid comes into contact with a poor solvent or before the spinning stock liquid is cooled to fix the structure completely. When the spinning stock liquid is structurally fixed, the vicinity of the surface of the stock liquid is in a state in which an energy level is high. Therefore, it is considered that when brought into contact with a poor solvent or moisture contained in the air, support components such as a polymer aggregate and thus the fiber surface is formed. Therefore, the porous structure needs to be determined to a certain extent before the spinning stock liquid comes into contact with a poor solvent, that is, in the dry section. Specifically, it is important to quickly induce phase separation after discharge of the stock liquid and thus sufficiently grow and expand the pore structure before the stock liquid comes into contact with a poor solvent, or to cool the fibers in the dry section to increase the viscosity of the stock solution and thus reduce the mobility of the support components to suppress aggregation. For its achievement, it is important to take a sufficient retention time in the dry section. Therefore, the retention time is 0.05 seconds or more, preferably 0.20 seconds or more, and more preferably 0.40 seconds or more. The retention time is calculated from the following formula.

$$\text{Retention time (sec)} = \text{dry length (m)/winding speed (m/sec)}$$

In a case where the temperature of the discharged fiber decreases in the dry section and the structure is quickly fixed by gelation, coagulation, or the like, gelation can be promoted by blowing cold air in the dry section. Although the detailed mechanism is not clear, by increasing the cold air speed to increase the cooling efficiency, the porosity of the fiber surface and the pore size in the vicinity of the fiber periphery can be increased. The spinning stock liquid discharged from the spinneret is coagulated in a coagulating bath. The coagulating bath usually includes a coagulation agent such as water or alcohol, or a mixture with a solvent that constitutes the spinning stock liquid. Usually, water is often used. The pore size can be changed by controlling the temperature of the coagulating bath. The pore size may be affected by the kind of the spinning stock liquid or the like, and therefore the temperature of the coagulating bath is also appropriately selected. In general, the pore size can be increased by increasing the coagulating bath temperature. Although the mechanism is not exactly clear, it is considered that the desolvation is fast in a high-temperature bath due to a competitive reaction between desolvation from the stock liquid and coagulation shrinkage, and thus the fiber is coagulated and fixed before the inside of the fiber contracts. However, if the coagulating bath temperature is too high, the pore size becomes excessively large, and thus influences are considered such as a decrease in specific surface area, a decrease in strength and elongation, and an increase in non-specific adsorption. Therefore, for example, in the case of a fiber containing PMMA, the coagulating bath temperature is preferably 90°C or lower, more preferably 75°C or lower, and particularly preferably 65°C or lower. Meanwhile, if the coagulation temperature is too low, the pore size decreases, and substances to be adsorbed are less likely to diffuse into the pores. Therefore, the lower limit is preferably 12°C or higher, and more preferably 20°C or higher.

Next, the fibers are washed to remove the solvent attached to the coagulated fibers. The method of washing the fibers is not particularly limited, and a method is preferably used in which the fibers are passed through a multi-stage water bath (referred to as a water washing bath). The temperature of water in the water washing bath is to be determined according to the property of the polymer that constitutes the fiber. For example, in the case of a fiber containing PMMA, a temperature of 30 to 50°C is adopted.

In order to maintain the pore size of the pores after the water washing bath, a step of applying a moisturizing component to the fiber may be added. The moisturizing component as used herein refers to a component capable of maintaining the humidity of the fiber or a component capable of preventing a decrease in the humidity of the fiber in the air. Typical examples of the moisturizing component include glycerin and an aqueous solution of glycerin.

After completion of washing with water and imparting of the moisturizing component, in order to enhance the dimensional stability of the highly shrinkable fiber, the fiber can also be subjected to a step of a bath filled with an aqueous solution of a heated moisturizing component (referred to as a heat treatment bath). The heat treatment bath is filled with an aqueous solution of a heated moisturizing component, and when the fiber passes through the heat treatment bath, the fiber undergoes a thermal action and shrinks, and is less likely to shrink in the subsequent steps, so that the fiber structure can be stabilized. The heat treatment temperature at this time depends on the material of the fiber. In the case of a fiber containing PMMA, the heat treatment temperature is preferably 50°C or higher, and more preferably 80°C or higher. Furthermore, the heat treatment temperature is preferably set to a temperature of 95°C or lower, and more preferably 87°C or lower.

A method of producing a separation column for purification of a biopharmaceutical using the obtained porous adsorption material is not particularly limited, and an example of the method is as follows. First, the porous adsorption material is cut into a required length and put into a casing so as to have a straight shape in the axial direction of the casing. After that, both ends of the porous adsorption material are cut with a cutter or the like so that the porous adsorption material can be housed in the casing, and the inlet and the outlet of the column for a liquid to be treated is provided with mesh filters cut to have a diameter equal to the inside diameter at the column's both end surfaces. Finally, an inlet port and an outlet port for a liquid to be treated, which are called header caps, are attached to both ends of the casing to obtain a separation column for purification of a biopharmaceutical.

EXAMPLES

Hereinafter, the present invention will be described in detail with reference to Examples and Comparative Examples, but the present invention is not limited thereto.

(1) TOF-SIMS Measurement (Measurement of Thickness of Layer Containing Nonionic Polymer or Biological Component Attachment-Inhibiting Polymer)

A sample (one fiber) was embedded in a resin, and a cross-section was prepared using a microtome blade. Measurement was performed under the following conditions using TOF.SIMS 5 (manufactured by IONTOF GmbH).

Primary ion: Bi3++
Primary ion acceleration voltage: 25 kV
Pulse width: 125.0 ns
Secondary ion polarity: negative
Number of scans: 96 scans
Cycle time: 200 us
Raster size: $50 \times 50 \ \mu m^2$
Mass range (m/z): 0 to 1500

<Layer Thickness Measurement 1>

From the obtained spectrum of the mass m/z, line profiles were produced for arbitrary three sites in the solid fiber cross-section, and the thickness of the layer containing the biological component attachment-inhibiting polymer was calculated to two significant digits. The average of the thicknesses at the three sites was determined as the thickness of the layer containing the biological component attachment-inhibiting polymer.

<Layer Thickness Measurement 2>

From the obtained spectrum of the mass m/z, a line profile was produced for arbitrary one site in the solid fiber cross-section, a line was drawn in a site where the profile of $CN^-$ + $CNO^-$ indicating the biological component attachment-inhibiting polymer appeared flat, and the interval between two points where the line intersected with an end of the peak derived from the biological component attachment-inhibiting polymer was determined as the thickness of the layer containing the biological component attachment-inhibiting polymer, and shown to two significant digits.

The vinylpyrrolidone/vinyl propanoate random copolymer (mole fraction of vinyl propanoate unit: 40%, number average molecular weight: 68,000), the vinylpyrrolidone/vinyl hexanoate random copolymer (mole fraction of vinyl hexanoate unit: 40%, number average molecular weight: 68,000), and the vinylpyrrolidone/vinyl propanoate random copolymer (mole fraction of vinyl propanoate unit: 40%, number average molecular weight: 100,000) used in the following Examples correspond to the biological component attachment-inhibiting polymer in the present invention, and are nonionic polymers.

(2) XPS Measurement (Proportion of Nitrogen Atoms (% by Number of Atoms) to 100 (% by Number of Atoms) of Total Atoms)

The sample was rinsed with ultrapure water, then dried at room temperature and 0.5 Torr for 10 hours, and subjected to the measurement.

[Measurement Conditions]

Apparatus: Quantera SXM (manufactured by PHI)
Excited X-ray: monochromatic AlK$\alpha$1,2 ray (1486.6 eV)
X-ray diameter: 100 um
Photoelectron detection angle: 45° (inclination of detector with respect to sample surface)

As the amount of nitrogen atoms, from the area of the peak appearing in the vicinity of 400 eV of N1s, the ratio of the area of this peak to all elements (since hydrogen atoms cannot be detected, all elements other than hydrogen atoms) was calculated, and the amount of nitrogen atoms (% by number of atoms) was determined.

(3) Measurement of Average Pore Radius

The average pore radius was determined by differential scanning calorimetry (DSC) with a differential scanning calorimeter (DSC) through measurement of the freezing point depression caused by capillary condensation of water in the pores. That is, the measurement was performed while the sample was rapidly cooled to -55°C and heated to 5°C at a rate of 0.3°C/min. The peak top temperature of the obtained curve was taken as the melting point, and the average pore radius was calculated from the following formula.

$$\text{Average pore radius [nm]} = (33.30 - 0.3181 \times \text{melting point depression [°C]})/\text{melting point}$$

As the measuring apparatus, DSC Q1001 manufactured by TA Instruments was used.
The melting point depression is a difference obtained by subtracting the peak top temperature of the curve from the melting point of water (0°C).

(4) Measurement of Average Pore Size

The surface of the sample was observed with a scanning electron microscope (SEM) (S-5500 manufactured by Hitachi High-Technologies Corporation), and image analysis was performed. The surface of the sample was observed using a SEM at a magnification of 50,000 times, and an image of 640 × 480 pixels was binarized with image processing software (ImageJ, developer: National Institutes of Health) to obtain an image in which a pore portion was shown in black and a structural polymer portion was shown in white.
In the sample cross-section, the central portion and the vicinity of the surface were observed, and image analysis was performed. In a field of view 1 of 225 × 225 pixels in contact with the surface and a field of view 2 of 225 × 225 pixels adjacent to the field of view 1 in the direction perpendicular to the surface, in a case where the ratio of the pore radius in the field of view 2 to the pore radius in the field of view 1 was less than 2, a field of view of 640 × 480 pixels completely covering the field of view 1 was regarded as the vicinity of the surface. In a case where the ratio of the pore radius in the field of view 2 to the pore radius in the field of view 1 was 2 or more, a field of view of 640 × 480 pixels completely covering the field of view 2 and including none of the field of view 1 was regarded as the vicinity of the surface. The center of a straight line having the longest length among straight lines obtained by connecting two points on the surface was regarded as the central portion. The pore was assumed to be a perfect circle, and the pore radius was calculated from the pore area with the following formula.

$$\text{Pore radius [nm] in central portion or in vicinity of surface} = (\text{pore area [nm}^2\text{] in central portion or in vicinity of surface}/\pi)^{1/2}$$

The sample was cut at arbitrary five sites, the obtained cross-sections were each measured at the central portion and the vicinity of the surface to determine the pore radius, and an average of the determined pore radii was determined as the average pore size in the central portion or the vicinity of the surface. The ratio of the average pore size in the central portion to the average pore size in the vicinity of the surface was calculated with the following formula.

Ratio of average pore size in central portion to average pore size in vicinity of surface = average pore size in central portion/average pore size in vicinity of surface.

(5) Evaluation of Adsorption Performance

The sample was taken using a single-edged razor blade so as to have a membrane area of 0.03 m², water was removed on a paper towel, and then the sample was put into a plastic tube with a lid. A culture supernatant derived from a CHO cell (hereinafter, referred to as "culture supernatant") adjusted to pH 7.4 by adding 0.6 N hydrochloric acid was added in an amount of 6.75 mL, the lid was closed, and the mixture was shaken and stirred at room temperature using a seesaw shaker (manufactured by TAITEC CORPORATION). After a lapse of 6 hours from the addition of the culture supernatant, the culture supernatant was sampled, and the antibody concentration and the HCP concentration in the culture supernatant were measured.

The antibody concentration was measured by immunoturbidimetry. The HCP concentration was measured with an ELISA method using CHO Host Cell Proteins 3rd Generation (manufactured by Cygnus Technologies). The amount of the adsorbed antibody, the amount of the adsorbed HCP, the antibody recovery rate, the HCP residual rate, the adsorption ratio of the protein, and the separation ratio were calculated with the following formulas.

$$\text{Amount of adsorbed antibody (mg/m}^2\text{)} = ((\text{antibody concentration} \times \text{liquid amount}) \text{ before adsorption} - (\text{antibody concentration} \times \text{liquid amount}) \text{ after adsorption}) \div 0.03$$

$$\text{Amount of adsorbed HCP (mg/m}^2\text{)} = ((\text{HCP concentration} \times \text{liquid amount}) \text{ before adsorption} - (\text{HCP concentration} \times \text{liquid amount}) \text{ after adsorption}) \div 0.03$$

$$\text{Adsorption ratio of protein} = \text{amount of adsorbed HCP} \div \text{amount of adsorbed antibody}$$

$$\text{Antibody recovery rate (\%)} = ((\text{antibody concentration} \times \text{liquid amount}) \text{ after adsorption} \div (\text{antibody concentration} \times \text{liquid amount}) \text{ before adsorption}) \times 100$$

# EP 4 316 646 A1

$$\text{HCP residual rate (\%)} = ((\text{HCP concentration} \times \text{liquid amount) after adsorption} \div (\text{HCP concentration} \times \text{liquid amount) before adsorption}) \times 100$$

$$\text{Separation ratio} = \text{antibody recovery rate} \div \text{HCP residual rate}$$

In the used culture supernatant before adsorption, the antibody concentration was 3.63 mg/mL, and the HCP concentration was 1.46 mg/mL.

The amount of the adsorbed antibody, the amount of the adsorbed HCP, the adsorption ratio of the protein, and the separation ratio were used as indices of the adsorption performance. When the porous adsorption material or the protein adsorption material of the present invention is used for purification of an antibody from a culture supernatant, the amount of the adsorbed antibody as a target is required to be low while the amount of adsorbed impurities represented by an HCP is required to be high. Therefore, it can be said that the amount of the adsorbed antibody, the amount of the adsorbed HCP, the adsorption ratio of the protein obtained by dividing the amount of the adsorbed HCP by the amount of the adsorbed antibody, and the separation ratio obtained by dividing the antibody recovery rate by the HCP residual rate serve as indices of a protein adsorption material having high purification efficiency.

(Example 1)

[Manufacturing of Protein Adsorption Material Having Pores]

With 376 parts by mass of dimethyl sulfoxide, 31.7 parts by mass of syn-PMMA having a mass average molecular weight of 400,000, 31.7 parts by mass of syn-PMMA having a mass average molecular weight of 1,400,000, 16.7 parts by mass of iso-PMMA having a mass average molecular weight of 500,000, and 20 parts by mass of a PMMA copolymer having a molecular weight of 300,000 and containing 1.5 mol% of sodium para-styrene sulfonate were mixed, and the resulting mixture was stirred at 110°C for 8 hours to prepare a spinning stock liquid. The obtained spinning stock liquid was discharged into the air at a rate of 1.1 g/min from cross-shaped and elliptical spinnerets (spinneret ratio = 17 : 7) maintained at 92°C, run 380nm through the air portion, then guided to a coagulating bath, and passed through the bath to obtain cross-shaped and elliptical solid fibers. water was used for the coagulating bath, and the water temperature (coagulating bath temperature) was 42°C. The fibers were washed with water and then guided to a bath including an aqueous solution containing 70 mass% of glycerin as a moisturizing agent. Thereafter, the fibers were passed through a heat treatment bath at a temperature of 84°C to remove excess glycerin, and then wound up at a rate of 16 m/min. This example was designated as Manufacturing Example 1.

The resulting sample of Manufacturing Example 1 was weighed out with an electronic balance, and washed with pure water 10 times while pure water was replaced. Water was removed on a paper towel, and then the sample was put into a plastic tube with a lid. An aqueous solution in which a vinylpyrrolidone/vinyl propanoate random copolymer (mole fraction of vinyl propanoate unit: 40%, number average molecular weight: 68,000) was dissolved at a concentration of 50 ppm and an ethanol concentration of 500 ppm was added into a plastic tube, and the plastic tube was irradiated with a $\gamma$ ray of 25 kGy. After the $\gamma$-irradiation, the copolymer aqueous solution was removed, and the resulting product was washed with pure water 10 times while pure water was replaced. This example was designated as Example 1.

For the obtained Example 1, the thickness of the layer containing the biological component attachment-inhibiting polymer (layer containing the biological component attachment-inhibiting polymer), the ratio of nitrogen atoms to 100 (% by number of atoms) of the total atoms, the average pore radius, the average pore size, and the adsorption performance were measured with the above-described methods. Table 1 shows the results.

(Example 2)

A treatment similar to that in Example 1 was performed except that the concentration of the vinylpyrrolidone/vinyl propanoate random copolymer (mole fraction of vinyl propanoate unit: 40%, number average molecular weight: 68,000) in Example 1 was changed to 100 ppm. This example was designated as Example 2. Table 1 shows the results.

(Example 3)

A treatment similar to that in Example 1 was performed except that the concentration of the vinylpyrrolidone/vinyl propanoate random copolymer (mole fraction of vinyl propanoate unit: 40%, number average molecular weight: 68,000) in Example 1 was changed to 200 ppm. This example was designated as Example 3. Table 1 shows the results.

(Example 4)

A treatment similar to that in Example 1 was performed except that an aqueous solution in which a vinylpyrrolidone/vinyl hexanoate random copolymer (mole fraction of vinyl hexanoate unit: 40%, number average molecular weight: 68,000) was dissolved at a concentration of 200 ppm and an ethanol concentration of 500 ppm was used instead of the aqueous solution in Example 1 in which a vinylpyrrolidone/vinyl propanoate random copolymer (mole fraction of vinyl propanoate unit: 40%, number average molecular weight: 68,000) was dissolved at a concentration of 100 ppm and an ethanol concentration of 500 ppm. This example was designated as Example 4. Table 1 shows the results.

(Example 5)

A treatment similar to that in Example 1 was performed except that an aqueous solution in which a vinylpyrrolidone/vinyl propanoate random copolymer (mole fraction of vinyl propanoate unit: 40%, number average molecular weight: 100,000) was dissolved at a concentration of 100 ppm and an ethanol concentration of 500 ppm was used instead of the aqueous solution in Example 1 in which a vinylpyrrolidone/vinyl propanoate random copolymer (mole fraction of vinyl propanoate unit: 40%, number average molecular weight: 68,000) was dissolved at a concentration of 100 ppm and an ethanol concentration of 500 ppm. This example was designated as Example 5. Table 1 shows the results.

(Example 6)

A treatment similar to that in Example 1 was performed except that the concentration of the vinylpyrrolidone/vinyl propanoate random copolymer (mole fraction of vinyl propanoate unit: 40%, number average molecular weight: 68,000) in Example 1 was changed to 10 ppm. This example was designated as Example 6. Table 1 shows the results.

(Example 7)

A treatment similar to that in Example 1 was performed except that the concentration of the vinylpyrrolidone/vinyl propanoate random copolymer (mole fraction of vinyl propanoate unit: 40%, number average molecular weight: 68,000) in Example 1 was changed to 1,000 ppm. This example was designated as Example 7. Table 1 shows the results.

(Comparative Example 1)

A treatment similar to that in Example 1 was performed except that pure water was used instead of the aqueous solution in Example 1 in which a vinylpyrrolidone/vinyl propanoate random copolymer (mole fraction of vinyl propanoate unit: 40%, number average molecular weight: 68,000) was dissolved at a concentration of 100 ppm and an ethanol concentration of 500 ppm. This example was designated as Comparative Example 1. Table 1 shows the results. The separation ratio is 1.9 and satisfies the preferred range, but the amount of the adsorbed antibody is 100 mg/m$^2$ or more and does not satisfy the preferred range, and it can be said that in Comparative Example 1, the performance is insufficient for a material for adsorption and removal of an HCP as an impurity from a culture supernatant of an antibody-producing cell.

(Comparative Example 2)

A treatment similar to that in Example 1 was performed except that an aqueous solution in which polyethyleneimine (molecular weight: 750,000) was dissolved at a concentration of 100 ppm was used instead of the aqueous solution in Example 1 in which a vinylpyrrolidone/vinyl propanoate random copolymer (mole fraction of vinyl propanoate unit: 40%, number average molecular weight: 68,000) was dissolved at a concentration of 100 ppm and an ethanol concentration of 500 ppm. This example was designated as Comparative Example 2. Table 1 shows the results.

[Table 1-1]

| | Kind of polymer | Treatment concentration (ppm) | Thickness of layer containing nonionic polymer (μm) | | Specific surface area (m²/g) | Average pore radius (nm) | Proportion of nitrogen atoms (% by number of atoms) to 100 (% by number of atoms) of total atoms |
|---|---|---|---|---|---|---|---|
| | | | Layer thickness measurement 1 | Layer thickness measurement 2 | | | |
| Example 1 | Vinylpyrrolidone/ vinyl propanoate random copolymer (molecular weight: 68,000) | 50 | - | 1.5 | 0.12 | 6 | - |
| Example 2 | | 100 | 1 | 2.7 | 0.12 | 5 | 4.1 |
| Example 3 | | 200 | 1.3 | 2.4 | 0.12 | 5 | 5 |
| Example 4 | Vinylpyrrolidone/ vinyl hexanoate random copolymer (molecular weight: 68,000) | 2 | - | 2.8 | 0.12 | 6 | - |
| Example 5 | Vinylpyrrolidone/ vinyl propanoate random copolymer (molecular weight: 100,000) | 200 | - | 3.5 | 0.12 | 5 | - |
| Comparative Example 1 | | 0 | 0 | 0.0 | 0.12 | 6 | 0.4 |
| Comparative Example 2 | Polyethyleneimine | 100 | - | 3.1 | 0.12 | 5 | - |
| Example 6 | Vinylpyrrolidone/ vinyl propanoate random copolymer (molecular weight: 68,000) | 10 | - | 0.6 | 0.12 | 6 | - |
| Example 7 | | 1000 | 2 | 5.6 | 0.12 | 6 | 4.1 |

[Table 1-2]

| | Ratio of average pore size in central portion to average pore size in vicinity of surface | Antibody recovery rate (8) | HCP residual rate (8) | Separation ratio | Amount of adsorbed antibody per area (mg/m$^2$) | Amount of adsorbed HCP per area (mg/m$^2$) | Adsorption ratio of protein |
|---|---|---|---|---|---|---|---|
| Example 1 | - | 91 | 43 | 2.1 | 75 | 188 | 2.50 |
| Example 2 | 0.9 | 92 | 55 | 1.7 | 66 | 148 | 2.24 |
| Example 3 | 1 | 95 | 62 | 1.5 | 38 | 126 | 3.28 |
| Example 4 | - | 91 | 55 | 1.7 | 71 | 148 | 2.08 |
| Example 5 | - | 96 | 53 | 1.8 | 37 | 154 | 4.18 |
| Comparative Example 1 | 0.8 | 87 | 46 | 1.9 | 108 | 179 | 1.66 |
| Comparative Example 2 | - | 88 | 82 | 1.1 | 102 | 58 | 0.57 |
| Example 6 | - | 94 | 63 | 1.5 | 45 | 122 | 2.71 |
| Example 7 | 0.8 | 96 | 65 | 1.5 | 34 | 115 | 3.38 |

INDUSTRIAL APPLICABILITY

The porous adsorption material of the present invention is capable of adsorbing a target protein while suppressing clogging due to a protein that is not an adsorption target, and therefore can be suitably used as a material for separation and purification of a protein as a target substance.

**Claims**

1. A porous adsorption material to be used for adsorbing and removing an impurity from a solution containing a raw biopharmaceutical compound, the porous adsorption material comprising a layer containing a nonionic polymer on at least one surface of the porous adsorption material.

2. The porous adsorption material according to claim 1, wherein the impurity is a protein, the nonionic polymer is a biological component attachment-inhibiting polymer, and the layer containing the biological component attachment-inhibiting polymer has a thickness of 3 um or less, the thickness determined by a method described below in compositional analysis by time-of-flight secondary ion mass spectrometry (TOF-SIMS) wherein

   in layer thickness measurement 1,
   from an obtained spectrum of mass m/z, line profiles are produced for arbitrary three sites in a cross-section of the porous adsorption material, and an average of thicknesses of the layer containing the biological component attachment-inhibiting polymer at the arbitrary three sites is determined as a thickness of the layer containing the biological component attachment-inhibiting polymer.

3. The porous adsorption material according to claim 1, wherein the layer containing the nonionic polymer has a thickness of 1.5 um or more and 5 um or less, the thickness determined by a method described below in compositional analysis by time-of-flight secondary ion mass spectrometry (TOF-SIMS) of the layer containing the nonionic polymer wherein

   in layer thickness measurement 2,
   from an obtained spectrum of mass m/z, a line profile is produced for arbitrary one site in a cross-section of the porous adsorption material, a line is drawn in a site where the line profile appears flat with focus on an ion species characteristic of the nonionic polymer, and an interval between two points where the line intersects with an end of a peak derived from the nonionic polymer is determined as a thickness of the layer containing the nonionic polymer.

4. The porous adsorption material according to any one of claims 1 to 3, having

   an average pore radius of 1 nm or more and 100 nm or less, the average pore radius being measured with a differential scanning calorimeter (DSC), and
   a specific surface area of 0.05 m$^2$/g or more and 0.5 m$^2$/g or less.

5. The porous adsorption material according to any one of claims 1 to 4, having a fiber shape.

6. The porous adsorption material according to any one of claims 1 to 5, wherein the nonionic polymer is a copolymer having a hydrophobic unit and a hydrophilic unit.

7. The porous adsorption material according to claim 6, wherein the hydrophobic unit is a monocarboxylic acid vinyl ester unit.

8. The porous adsorption material according to claim 7, wherein the nonionic polymer further has a vinylpyrrolidone unit.

9. The porous adsorption material according to claim 7 or 8, wherein the monocarboxylic acid vinyl ester unit is "-CH(OCO-R)-CH$_2$- " wherein R represents an aliphatic hydrocarbon group having 2 to 5 carbon atoms.

10. The porous adsorption material according to any one of claims 1 to 8, capable of adsorbing a host cell protein (HCP) selectively from a solution containing an antibody and the HCP.

11. The porous adsorption material according to claim 10, wherein a separation ratio of the antibody to the HCP is 1.5 or more.

12. A separation column for purification of a biopharmaceutical, the separation column comprising the porous adsorption material according to any one of claims 1 to 11 inside.

13. A method for manufacturing a biopharmaceutical, the method comprising the steps of:

    preparing a solution containing a raw biopharmaceutical compound; and
    bringing the solution containing a raw biopharmaceutical compound into contact with the porous adsorption material according to any one of claims 1 to 11.

14. The method for manufacturing a biopharmaceutical according to claim 13, wherein a porous hollow fiber membrane and the porous adsorption material according to any one of claims 1 to 11 are continuously disposed and each separate and remove an impurity.

## INTERNATIONAL SEARCH REPORT

| International application No. |
|---|
| **PCT/JP2022/012248** |

**A. CLASSIFICATION OF SUBJECT MATTER**

***B01J 20/26***(2006.01)i; ***B01J 20/28***(2006.01)i; ***G01N 27/62***(2021.01)i
FI: B01J20/26 H; B01J20/28 Z; G01N27/62 V

According to International Patent Classification (IPC) or to both national classification and IPC

**B. FIELDS SEARCHED**

Minimum documentation searched (classification system followed by classification symbols)

B01J20/26; B01J20/28; G01N27/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/225730 A1 (TORAY INDUSTRIES, INC.) 28 November 2019 (2019-11-28) paragraphs [0002], [0008], [0010], [0028], [0029], [0034], [0061], [0064]-[0066], examples, claims | 1-9, 12-14 |
| A | JP 2019-166520 A (TORAY INDUSTRIES, INC.) 03 October 2019 (2019-10-03) | 1-14 |
| A | WO 2016/175306 A1 (SHOWA DENKO KK) 03 November 2016 (2016-11-03) | 1-14 |
| A | WO 2017/090658 A1 (JSR CORP.) 01 June 2017 (2017-06-01) | 1-14 |
| A | JP 2012-224729 A (ASAHI KASEI MEDICAL CO., LTD.) 15 November 2012 (2012-11-15) | 1-14 |
| A | JP 7-509173 A (SEPRACOR INC.) 12 October 1995 (1995-10-12) | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT<br>Information on patent family members | | | International application No.<br>**PCT/JP2022/012248** |
|---|---|---|---|

| Patent document<br>cited in search report | | | Publication date<br>(day/month/year) | Patent family member(s) | | | Publication date<br>(day/month/year) |
|---|---|---|---|---|---|---|---|
| WO | 2019/225730 | A1 | 28 November 2019 | US | 2021/0213394 | A1 | |
| | | | | paragraphs [0002], [0010], [0012], [0034], [0035], [0042], [0069], [0072]-[0074], examples, claims | | | |
| | | | | EP | 3766567 | A1 | |
| | | | | CN | 112074340 | A | |
| | | | | KR | 10-2021-0011372 | A | |
| JP | 2019-166520 | A | 03 October 2019 | (Family: none) | | | |
| WO | 2016/175306 | A1 | 03 November 2016 | US | 2018/0298052 | A1 | |
| | | | | EP | 3290431 | A1 | |
| WO | 2017/090658 | A1 | 01 June 2017 | US | 2018/0346704 | A1 | |
| | | | | EP | 3381971 | A1 | |
| | | | | KR | 10-2018-0086421 | A | |
| | | | | CN | 108699256 | A | |
| JP | 2012-224729 | A | 15 November 2012 | (Family: none) | | | |
| JP | 7-509173 | A | 12 October 1995 | US | 5268097 | A | |
| | | | | US | 5393430 | A | |
| | | | | US | 5445732 | A | |
| | | | | US | 5470463 | A | |
| | | | | US | 5593576 | A | |
| | | | | US | 5599453 | A | |
| | | | | US | 5672276 | A | |
| | | | | US | 5906734 | A | |
| | | | | US | 6045697 | A | |
| | | | | WO | 1994/000214 | A1 | |
| | | | | EP | 646038 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016067967 A
- JP 2014207989 A
- JP 2019225730 A
- JP 2020006155 A
- JP 5420341 B

**Non-patent literature cited in the description**

- **KAZUHIRO ISHIKIRIYAMA et al.** *JOURNAL OF COLLOID AND INTERFACE SCIENCE,* 1995, vol. 171, 103-111